# EUROPÄISCHE PATENTSCHRIFT

(11) **EP 0 572 966 B1**
(45) Veröffentlichungstag und Bekanntmachung des Hinweises auf die Patenterteilung: **28.08.1996**
(21) Anmeldenummer: 93108767.0
(22) Anmeldetag: 01.06.1993
(51) Int. Cl.: F16J 3/02

(54) **Membranbaugruppe für pneumatische Regelgeräte**
Diaphragm assembly for pneumatic regulator
Diaphragme pour appareil de réglage pneumatique

(30) Priorität: 02.06.1992 DE 9207410 U
(43) Veröffentlichungstag der Anmeldung: 08.12.1993
(73) Patentinhaber: HONEYWELL B.V., NL-1101 EA Amsterdam Z.O. (NL)
(72) Erfinder: Hietkamp, Albert, NL-7812 NT Emmen (NL)
(74) Vertreter: Rentzsch, Heinz, Dipl.-Ing.

(56) Entgegenhaltungen:
- DE-C- 458 931
- FR-A- 1 493 720
- FR-A- 2 309 775

## Beschreibung

Die Erfindung betrifft eine Membranbaugruppe bestehend aus einer Membran, dem von ihr getragenen Schließkörper oder Sitz eines Regelventils sowie einem an der Membran anliegenden Membranteller, an welchem beispielsweise eine die Membran belastende Feder angreift, wie bekannt aus Dokument DE-C-458 931. Solche Membranbaugruppen werden für verschiedene Zwecke in pneumatischen Regelgeräten, beispielsweise in Gasdruckreglern eingesetzt. Bekannt sind zwei verschiedene Bauweisen solcher Membranbaugruppen. Bei der einen ist die Membran mit einem zentralen Loch versehen, wobei der Ventilsitz oder der Ventilschließkörper mit einem Zapfen durch das Loch hindurchragt und auf der gegenüberliegenden Seite mit dem Membranteller verschraubt ist und den zentralen Teil der Membran zwischen den beiden genannten Teilen einspannt. Bei der zweiten Bauform ist auf die eine Seite der Membran der Membranteller und auf die gegenüberliegende Seite eine den Schließkörper tragende Platte aufgeklebt. Nachteilig bei dieser Bauweise ist, daß der Abstand zwischen Membranteller und Schließkörper durch die Dicke der Membran bestimmt wird, welche stark temperaturabhängig und mechanisch belastungsabhängig ist.

Die im Anspruch 1 gekennzeichnete Erfindung schafft eine vereinfachte Membranbaugruppe der eingangs genannten Art, welche einerseits einen genauen Abstand zwischen Membranteller und Ventilkörper, d.h. Schließkörper oder Ventilsitz, definiert und andererseits leicht herstellbar und montierbar ist. Dadurch, daß man Membranteller und Ventilkörper einstückig herstellt, ist der Abstand zwischen Membranteller und Ventilkörper, d.h. zwischen dem Membranteller und der Schließfläche des Schließkörpers oder Ventilsitzes eindeutig vorgegeben. Zum anderen wird die Montage erleichtert, indem der Ventilkörper einfach in den zentralen Wulst der Membran eingeknöpft und somit der Wulst dichtend zwischen Membranteller und Ventilkörper eingespannt wird. Vorteilhafte Ausgestaltungen ergeben sich aus den Unteransprüchen.

Die Erfindung wird nachfolgend anhand eines in den Zeichnungen wiedergegebenen Ausführungsbeispiels erläutert. Dabei zeigt:
- Fig. 1: eine Ausführungsform mit getrennter Darstellung von Membran und Einknöpf-Bauteil;
- Fig. 2: die Membranbaugruppe im zusammengebauten Zustand.

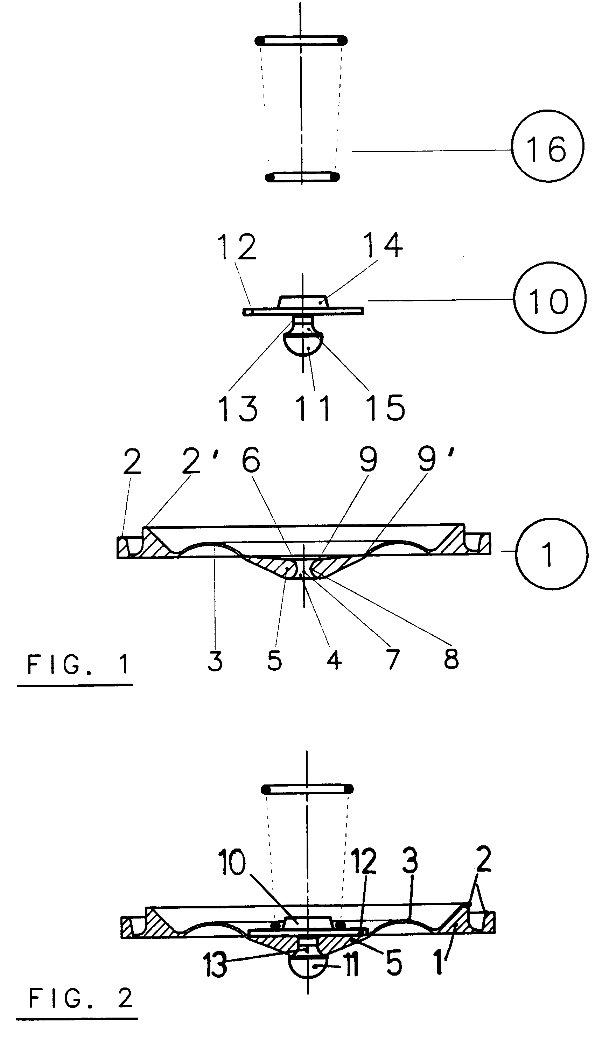

In Figur 1 weist die Membran 1 einen äußeren profilierten Verstärkungs- und Einspannring 2 - 2' auf, mit dem sie zwischen zwei sich gegenüberstehenden Teilen eines Reglergehäuses abgedichtet eingespannt wird. Nach innen schließt sich der elastisch verformbare aktive Membranteil 3 in Form eines Kreisringes an. In der Mitte ist die Membran mit einem Loch 4 versehen, welches von einem Ringwulst 5 umgeben ist. Die Innenflächen 6 dieses Ringwulstes 5 nehmen in Richtung der Bewegungsachse 7 von einer mittleren Stelle 8 geringsten Durchmessers nach beiden Achsrichtungen hin im Durchmesser zu und sind im gezeigten Beispiel torroidförmig angerundet. Im dargestellten entspannten Zustand ist die später im zusammengebauten Zustand am Membranteller anliegende Fläche 9 - 9' leicht gewölbt oder abgeschrägt. Bei allen dynamischen Bewegungen der Membran bleibt die Anlage dieser Fläche am Membranteller erhalten, so daß man eine definierte aktive Oberfläche des Membrantellers erhält.

Das Einknöpfbauteil 10 besteht aus einem Schließkörper 11, einem Membranteller 12, sowie einem Zwischenstück 13 und einem auf der gegenüberliegenden Seite am Membranteller 12 vorgesehenen Zentrieransatz 14 für eine auf die Membran einwirkende Kegel- oder Schraubenfeder 16. Das Zwischenstück 13 ist ähnlich wie die Innenwand 6 des Lochs 4 in der Membran 1 mit einer in wenigstens einer Achsrichtung im Durchmesser zunehmenden Außenwandfläche 15 versehen, an welcher im zusammengebauten Zustand die Innenwand 6 der Membran abdichtend anliegt. Wird das Bauteil 10 in die Membran eingeknöpft, wie dies aus Figur 2 ersichtlich ist, so wird dabei die Wölbung 9 der Membran gegen den Membranteller 12 gedrückt und der Wulst 5 hierdurch derart verformt, daß seine Innenwandfläche 6 gegen das Zwischenstück 13 des Bauteils 10 gedrückt wird. Diese Verformung führt also zu einer zusätzlichen Abdichtkraft.

Im gezeigten Ausführungsbeispiel ist der vom Membranteller 12 getragene Ventilkörper 11 der Schließkörper eines Regel- oder Abblasventils. Ihm gegenüber ist, wie üblich, gehäusefest ein Ventilsitz angeordnet. Am Ansatz 14 stützt sich eine Feder 16 ab, welche einer von unten auf die Membran einwirkenden Kraft entgegenwirkt..

Bei der gezeigten Ausführungsform nimmt die axiale Dicke des Wulstes 5 gleichförmig nach außen hin ab. Er könnte aber statt dessen stufenförmig in den aktiven Membranteil 3 übergehen. Das einstückige Einknöpfbauteil 10 kann aus Kunststoff oder Metall bestehen.

## Patentansprüche

1. Den Schließkörper oder den Sitz eines Ventils tragende Membranbaugruppe für pneumatische Regelgeräte, insbesondere Gasdruckregler, **dadurch gekennzeichnet,** daß
a) der auf der einen Seite der Membran (1) befindliche Ventilkörper (11) zusammen mit einem auf der gegenüberliegenden Seite der Membran anliegenden Membranteller (12) und einem diese beiden Teile verbindenden Zwischenstück (13) ein einstückiges Bauteil (10) bildet;
b) das Zwischenstück (13) einen geringeren Durchmesser hat als der Ventilkörper (11) und der Membranteller (12);
c) die Membran (1) einen eine zentrale Öffnung (4) umgebenden Wulst (5) aufweist; und
d) das Bauteil (10) in die zentrale Öffnung (4) eingeknöpft ist, so daß die Innenwand (6) des Wulstes (5) am Zwischenstück (13) dichtend anliegt.

2. Membranbaugruppe nach Anspruch 1, **dadurch gekennzeichnet,** daß die dem Zwischenstück (13) zugewandte Innenfläche (6) des Wulstes in beiden Achsrichtungen des Ventilkörpers (11) im Durchmesser zunehmende Wandflächen (6) aufweist, welche an gleichfalls in Durchmesser zunehmenden Außenflächen (15) des Zwischenstücks (13) anliegen.

3. Membranbaugruppe nach Anspruch 2, **dadurch gekennzeichnet,** daß die Außenflächen (15) des Zwischenstücks (13) und die Innenflächen (6) des Wulstes (5) torroidförmig abgerundet sind.

4. Membranbaugruppe nach einem der Ansprüche 1 bis 3, **dadurch gekennzeichnet,** daß der Wulst (5) eine flach am Membranteller (12) anliegende Ringfläche (9, 9') aufweist.

5. Membranbaugruppe nach einem der Ansprüche 1 bis 4, **dadurch gekennzeichnet,** daß der Wulst (5) in seiner axialen Dicke nach außen hin bis zum Außenrand des Membrantellers (12) gleichförmig abnimmt.

6. Membranbaugruppe nach einem der Ansprüche 1 bis 5, **dadurch gekennzeichnet,** daß der Wulst (5) von einer ringförmigen elastischen Membranfläche (3) umgeben ist und diese außen einen Einspannrand (2) trägt.

7. Membranbaugruppe nach einem der Ansprüche 1 bis 6, **dadurch gekennzeichnet,** daß der Membranteller (12) einen ring- oder zapfenförmigen Ansatz (14) zur zentrierten Anlage einer auf die Membran einwirkenden Kegel- oder Schraubenfeder (16) aufweist.

8. Membranbaugruppe nach einem der Ansprüche 1 bis 7, **dadurch gekennzeichnet,** daß die dem Membranteller (12) zugewandte Oberfläche (9, 9') des Wulstes (5) im entspannten Zustand der Membran (1) zum Membranteller (12) hin konkav gewölbt oder abgeschrägt ist.

## Claims

1. A diaphragm assembly for pneumatic control apparatus, in particular gas pressure regulators with said assembly carrying the closure member or the seat of a valve, **characterized in that:**
a) the valve body (11), located at the one side of the diaphragm (1), together with a diaphragm disk (12), provided at the opposite side ofthe diaphragm, and an intermediate piece (13) connecting those two parts constitute a single-piece member (10);
b) the intermediate piece (13) has a smaller diameter than the valve body (11) and the diaphragm disk (12);
c) the diaphragm (1) has a swelling (5) surrounding a central opening (4); and
d) the member (10) is buttoned into the central opening (4) so that the inner wall (6) of the swelling (5) sealingly engages said intermediate piece (13).

2. Diaphragm assembly according to claim 1, **characterized in that** the inner surface (6) ofthe swelling, facing the intermediate piece (13), in both axial directions of the valve body (11) has wall surfaces (6) of increasing diameter, which wall surfaces engage outer surfaces (15) ofthe intermediate piece (13) which also have increasing diameters.

3. Diaphragm assembly according to claim 2, **characterized in that** the outer surfaces (15) of the intermediate piece (13) and the inner surfaces (6) of the swelling (5) are rounded like a torroid.

4. Diaphragm assembly according to one of the claims 1 to 3, **characterized in that** the swelling (5) has a ring surface (9, 9') which flatly engages the diaphragm disk (12).

5. Diaphragm assembly according to one ofthe claims 1 to 4, **characterized in that** the axial thickness of the swelling (5) in radial direction to the outer edge of the diaphragm disk (12) decreases continously.

6. Diaphragm assembly according to one ofthe claims 1 to 5, **characterized in that** the swelling (5) is surrounded by a ring-shaped resilient diaphragm surface (3) which at its outer circumference carries a clamping edge (2).

7. Diaphragm assembly according to one of the claims 1 to 6, **characterized in that** the diaphragm disk (12) has a ring or stud-shaped projection (14) for being centrally engaged by a conical or coil spring (16) acting upon said diaphragm.

8. Diaphragm assembly according to one of the claims 1 to 7, **characterized in that** the surface (9, 9') of the swelling (5), facing diaphragm disk (12) in the unloaded condition of the diaphragm (1) is concavely curved or inclined in the direction to diaphragm disk (12).

## Revendications

1. Module de membrane portant le corps de fermeture ou le siège d'une soupape, pour des appareils de régulation pneumatiques, notamment des régulateurs de pression de gaz, caractérisé en ce que
a) le corps de soupape (11), situé sur l'une des faces de la membrane (1) forme, avec un disque de membrane (12) appliqué sur la face opposée de la membrane et un élément intercalaire (13) reliant ces deux parties, un composant monobloc (10);
b) l'élément intercalaire (13) possède un diamètre inférieur à ceux du corps de soupape (11) et du disque de membrane (12);
c) la membrane (1) possède un bourrelet (5) qui entoure une ouverture centrale (4); et
d) le composant (10) est encliqueté dans l'ouverture centrale (4) de telle sorte que la paroi intérieure (6) du bourrelet (5) s'applique d'une manière étanche contre l'élément intercalaire (13).

2. Module de membrane selon la revendication 1, caractérisé en ce que la surface intérieure (6) du bourrelet, tournée vers l'élément intercalaire (13), présente des surfaces de paroi (6) dont le diamètre augmente dans les deux directions de l'axe du corps de soupape (11) et qui s'appliquent contre des surfaces extérieures (15) de l'élément intercalaire (13), dont le diamètre augmente de la même façon.

3. Module de membrane selon la revendication 2, caractérisé en ce que les surfaces extérieures (15) de l'élément intercalaire (13) et les surfaces intérieures (6) du bourrelet (5) sont arrondies sous une forme toroïdale.

4. Module de membrane selon l'une des revendications 1 à 3, caractérisé en ce que le bourrelet (5) possède une surface annulaire (9,9') qui s'applique à plat contre le disque de membrane (12).

5. Module de membrane selon l'une des revendications 1 à 4, caractérisé en ce que l'épaisseur axiale du bourrelet (5) diminue uniformément vers l'extérieur jusqu'au bord extérieur du disque de membrane (12).

6. Module de membrane selon l'une des revendications 1 à 5, caractérisé en ce que le bourrelet (5) est entouré par une surface de membrane élastique annulaire (3) et cette dernière porte sur l'extérieur un bord de serrage (2).

7. Module de membrane selon l'une des revendications 1 à 6, caractérisé en ce que le disque de membrane (12) possède un embout saillant de forme annulaire ou en forme de téton (14) pour l'appui centré d'un ressort conique ou d'un ressort hélicoïdal (16) agissant sur la membrane.

8. Module de membrane selon l'une des revendications 1 à 7, caractérisé en ce que la surface (9,9') du bourrelet (5), qui est tournée vers le disque de membrane (12), est cintrée sous une forme concave ou est oblique, par rapport au disque de membrane (12), lorsque la membrane (1) est dans l'état détendu.
